# EUROPEAN PATENT APPLICATION

(11) **EP 4 468 320 A1**
(43) Date of publication of application: **27.11.2024**
(21) Application number: 23174844.3
(22) Date of filing: 23.05.2023
(51) Int. Cl.: H01J 45/00

(54) **DEVICE FOR TRANSFORMATION OF THERMAL INTO ELECTRICAL ENERGY**

(71) Applicant: Airbus Operations GmbH, 21129 Hamburg (DE)
(72) Inventor: Klügel, Markus, 21129 Hamburg (DE)

(57) **Abstract**

Devices and methods are provided for transformation of thermal energy directly into electrical energy. A fluid having particles adapted to accept and emit electrons is accommodated in a container. At the container, a cathode is configured to emit electrons, wherein the particles of the fluid accept electrons emitted by the cathode, and an anode is configured to accept electrons, wherein the particles of the fluid emit electrons accepted by the anode. Further, a heat transfer unit is configured to exchange heat with the fluid so that the particles of the fluid are accelerated, and an electric field generator is configured to generate an electric field so that negatively charged particles of the fluid are driven in a direction towards the cathode, while positively charged particles are driven towards the anode. In such an arrangement, kinetic energy can be transformed directly into electrical energy.

## Description

### FIELD OF THE INVENTION

The present invention relates to a transformation of energy, in particular, the present invention relates to a transformation of thermal energy into electrical energy. The transformation may be realized by use of an ionized gas and of an electric counterfield. It is therefore related to the two fields of cooling and of electric power generation. It is applicable at cooling units inside an aircraft. For example, it may be applicable for cooling a cabin or electric units, up to the cooling of hydrogen tanks. It may also be appropriate for energy harvesting from heat, for example for sensors inside an aircraft cabin.

### BACKGROUND OF THE INVENTION

Some technical fields may be seen as being related to the disclosure, namely thermoelectric power generation, electro-hydrodynamics, thermionic generators and the use of electric counterfields to influence properties of electric components.

The transfer of thermal power into electric power may be based on the Seebeck Effect. In this effect, two materials with different electric properties are combined in a way that a temperature difference between them creates a voltage. However, devices based on that effect have a very low conversion efficiency of about 10%.

Electro-hydrodynamics (EHD) consider the interaction of an electrically charged fluid with electric fields. In general, this includes electro-hydrodynamic pumps in which electric or magnetic fields are used to move ionized liquids. Further, EHD may be used for power generation, for example in an electro-hydrodynamic generator or in a magneto-hydrodynamic (MHD) generator. In the MHD generator, an ionized fluid is exposed to a magnetic field, where the Lorentz force drives charged particles in one direction, creating an electric voltage. While the physical principle looks slightly similar to that of the disclosure, MHD and EHD generators use energy from fluid streams rather than heat to generate electric power.

Electric counterfields are used in various analog electric components, such as diodes, triodes or thyratrons. These components consist of a vacuumed or gas-filled tube containing a hot cathode, an anode and a gate producing a counterfield. The hot cathode emits electrons when being heated, by means of thermionic emission. The electrons either pass through the vacuum/gas or ionize the contained gas and are slowed down by the counterfield of the gate. After passing the gate, they are accepted by the anode. Different variants of gas and gate configurations exist which produce different desirable electric behaviors. Finally, thermionic generators use thermionic emission of an anyways hot surface and use the inherent speed of emitted electrons to surpass the potential of an electric counterfield. However, the aforementioned components cannot transform thermal energy to electric energy efficiently for different reasons. Firstly, electrons themselves have very little capacity for thermal energy, making the transformation from thermal to electric energy inefficient. Secondly, the space-charge limit allows only a certain electron density being transferred over a vacuum, which limits the current flow in thermionic generators.

### SUMMARY OF THE INVENTION

It may be seen as an object to provide a device which allows for an efficient and direct transformation of heat into electrical energy. A solution is provided by the subject-matter of each of the independent claims. Further embodiments are defined by the respective dependent claims. The embodiments can exist in versions with negatively or positively charged particles. In the following, examples for the negative charged versions are explained.

In general and in accordance with the invention, a container is provided that is filled with a fluid of an element that accepts electrons to become negatively charged, as well as a cathode that emits electrons to the gas. Further, an anode is provided that accepts electrons from the fluid, wherein, e.g., a heatsink transfers ambient heat to the gas and wherein an electric field is generated within the container.

The transfer of heat into electric potential may work in the following way.
1. A fluid in a container may have a certain temperature induced by a heatsink that transfers ambient heat to the gas. The temperature causes a molecular movement. The particles of the fluid permanently hit each other, thus, speeding each other up and slowing each other down. The temperature is thereby directly proportional to the average kinetic energy of the particles.
2. A cathode emits electrons which are accepted by the particles of the gas. These particles are now ionized and negatively charged.
3. An electric field is established that pushes the ionized particles towards the cathode and away from the anode.
4. Due to the existing temperature of the gas, the particles move in space and hit each other permanently. With a certain probability, particles move a certain distance towards the anode. Also with a certain probability, an ion may hit a neutral particle and transfer its electron to the neutral particle. Both, movement and electron transfer, create a diffusion effect that transports the charges against the force of the electric field.
5. On the way to the anode, an electron will slow down all particles that it resides on by a small amount, due to the electric field pushing it towards the cathode. In this process, the hosting particles lose kinetic energy, however, the electron gains electric energy.
6. When hitting the anode, an ion may pass its electrons on to it. The particle now has a neutral charge and is not influenced by the electric field anymore. In particular, it is not accelerated back towards the cathode, as it would have when it would still be charged.

The electrons have been transported to the anode against an electric field, gaining electric energy. The particles are slowed down and therefore the temperature of the gas has been reduced.

Compared to the thermoelectric generators, the disclosed invention uses ionized gas and counterfields to transform thermal into electric energy, instead of materials with different electric properties.

Compared to electro-hydrodynamics, heat is used as energy source, rather than the movement.

Compared to electric components such as diodes, triodes and thyratrons, the disclosed invention is used to transform heat into electrical energy. While several electric components use gas and ionization, the used gas does not accept electrons. Instead, the electrons emitted by the cathode are used to separate electrons from the atomic hull, rendering the particles into positively charged ions. Further, the electric components do not have a heatsink attached that has the purpose to transfer ambient heat to the gas.

Compared to thermionic generators, the disclosed invention uses the diffusion of a gas or liquid to transport the particles against an electric potential, rather than the kinetic movement of electrons issued by thermionic emission.

In consequence, the invention achieves the transformation of thermal energy (heat) into electric energy. This may be used either to cool an environment while transporting the energy away as electric current, or to generate power from heat.

In accordance with the disclosure, the particles of the fluid may be atoms, molecules and/or nanoparticles which are adapted to accept and to emit electrons. Further, the fluid may be a liquid, a suspension, a gas, and/or a gas mixture. It will be understood that the fluid may comprise a combination of the mentioned particles in liquid or gaseous form.

Although mentioned above as configured to be negatively ionized and charged, the fluid may also be configured to be positively ionized. Further below, an embodiment is described for such an embodiment.

With respect to the cathode, it is noted that different possibilities may lead to an emission of electrons from the cathode. Firstly, the cathode may be configured to emit electrons by thermionic emission. Secondly, the cathode may be charged with electrons so that the electrons can be emitted by the cathode. Thirdly, the cathode may be made of a material having a valence band having higher energy than a lower free band of particles of the fluid, creating a lower work function on the cathode than on the particles and enabling spontaneous electron transfer. The same effect may also be issued on the anode by using a higher work function on the anode than on the fluid. The work function may be created based on a Faraday effect transporting electrons to the surface of the cathode as well as away from the surface of the anode. In all cases, the electrons may be emitted by the cathode and accepted by a particle of the fluid upon contact of the particle to the cathode.

Furthermore, the anode, the cathode and the fluid may be made of materials which interact chemically so as to exchange electrons.

Another aspect of the device according to the disclosure is the electric field generator which may comprise a grid arranged within the container. Alternatively or additionally, the electric field generator may comprise a ring arranged around the container. Further, the electric field generator may be integrated in at least one of the anode and the cathode may be arranged at the anode and/or at the cathode.

A method of transforming thermal energy into electrical energy may comprise the steps of transferring thermal energy to a fluid in a container, the thermal energy increasing the kinetic energy of particles of the fluid, emitting electrons from a cathode, the electrons being accepted by particles of the fluid so that the particles are negatively charged, establishing an electric field between the cathode and an anode, the electric field urges the particles in a direction towards the cathode, transporting the electrons by the particles against the electric field by means of diffusion, so that kinetic energy of the particles is transformed in potential energy in form of electric charge, emitting the electrons from the particles to the anode. It will be understood that this method may be seen as being focused on one particle and the interaction thereof with the elements of the device. With a multiplicity of particles in the fluid accommodated in the container, the method will be suitable to continuously transfer heat into electric energy.

As mentioned above, a method of transforming thermal energy into electrical energy may also work with positively ionized particles. Accordingly, the method may comprise the steps of transferring thermal energy to a fluid in a container, the thermal energy increasing the kinetic energy of particles of the fluid, firstly emitting electrons from particles of the fluid to an anode so that the particles are positively charged, establishing an electric field between the cathode and an anode, wherein the electric field urges the particles in a direction towards the anode, transporting electrons by particles against the electric field by means of diffusion so that kinetic energy of the particles is transformed in potential energy in form of electric charge, accepting electrons from the cathode so that the particles will have a neutral charge again.

It will be understood that both methods with positive and negative charges may work at the same time, depending on the composition of the fluid.

### BRIEF DESCRIPTION OF DRAWINGS

Exemplary embodiments of the invention will be described in the following with reference to the drawings:
Figure 1 is a schematical illustration of a device in accordance with an embodiment.
Figure 2 illustrates a situation in which negatively ionized particles move inside a container.
Figure 3 illustrates a situation in which positively ionized particles move inside a container.

The embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of', when preceding a list of elements, modify the entire list of elements and do not modify the individual elements of the list.

### DETAILED DESCRIPTION OF EMBODIMENTS

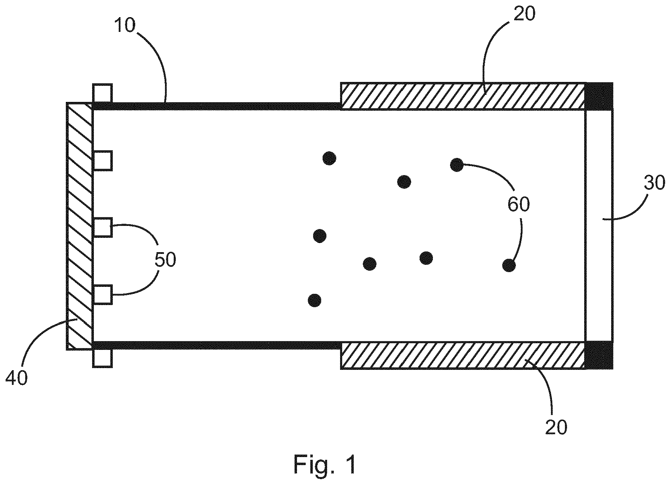

Figure 1 shows an embodiment of a device that can transform thermal energy directly into electric energy. As shown in figure 1, the device consists of six elements, namely (i) a gas or liquid 60 of a material that can accept or donate electrons to become negatively or positively charged, (ii) a container 10 containing the gas, (iii) a cathode 30 at a first end of the container, that emits electrons to the gas, (iv) an anode 40 at a second end of the container opposite to the first end, that accepts electrons from the gas, (v) a heat transfer unit 20 transporting ambient heat into the gas, e.g., arranged at the sides of the container, and (vi) a counterfield generation element 50 arranged so as to generate an electric field within the container.

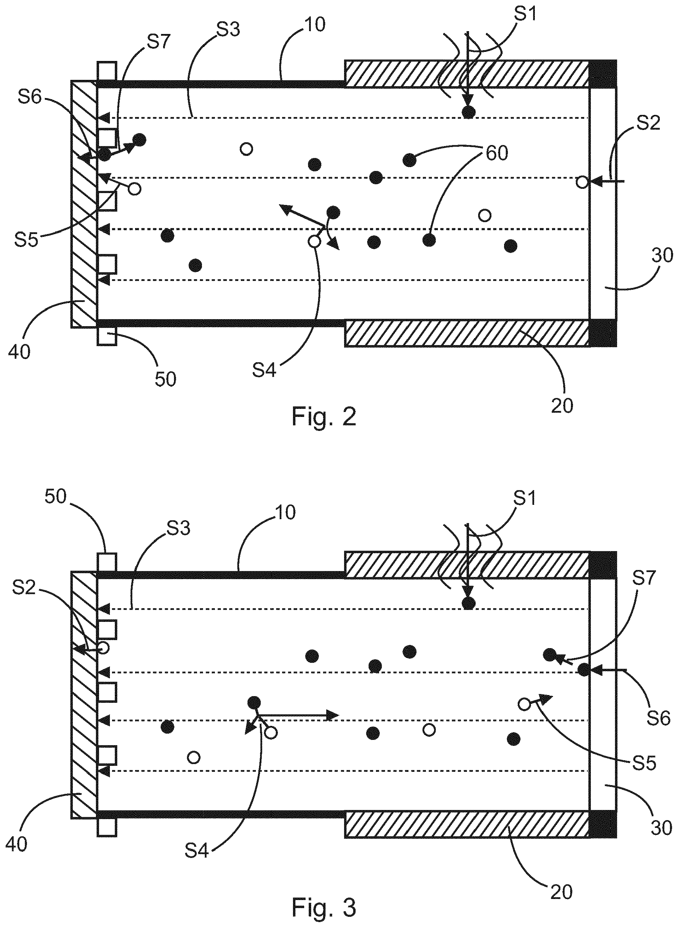

As a first example, figure 2 shows the six elements as used to transform kinetic energy into electrical energy. The heat transfer unit 20 transfers heat to the gas 60 by means of thermal conduction, which increases its temperature. This takes place whenever the particles of the gas hit the heat transfer unit 20 (S 1). The cathode 30 emits electrons (S2), which are accepted by the particles of the gas 60. These particles are now ionized and negatively charged. An electric field (arrows in dotted lines) is established by an electric field generator 50 (S3) that pushes the ionized atoms towards the cathode and away from the anode. Due to the existing temperature of the gas, the particles move in space and hit each other permanently (e.g. at S4). With certain probability, some of the ionized particles will move against the direction of the electric field. Some will collide with neutral particles and transfer their charge to them. Eventually, by means of random movement and charge transfer, an electron is transported the whole way to the anode, where its hosting ion hits the anode (S5). On the way to the anode, the ionized particles will be slowed down by the electric field and in this process they lose kinetic energy. However, the electrons on the particles gain electric energy because they are transported against the electric force by the particles. When hitting the anode, the electrons are passed on to it (S6). The particles now have a neutral charge and are no longer influenced by the electric field. In particular, the particles are not accelerated back towards the cathode, as it would have when it would still be negatively charged. The electrons have been transported to the anode against an electric field, gaining electric energy. The particles are slowed down and therefore have lost kinetic energy. The temperature of the gas has been reduced.

As illustrated in figure 3, an embodiment may exist in which positive ions overcome the electric field to transform heat into electric energy. The heat transfer unit 20 transfers heat to the gas 60 by means of thermal conduction, which increases the temperature. This takes place whenever particles of the gas hit the heat transfer unit (S1). Neutral particles hit the anode (S2), where the particles emit an electron to the anode so that they become positively charged. An electric field is established by the electric field generator 50 that pushes the positively ionized particles towards the anode and away from the cathode (S3). Due to the existing temperature of the gas, the particles move in space and hit each other permanently (S4). With a certain probability, some of the ionized particles will move against the direction of the electric force. Some will collide with neutral particles and accept a charge from them. Eventually, by means of random movement and charge transfer, a positive charge is transported the whole way to the cathode, where its hosting ion hits the cathode (S5). On the way to the cathode, the particles will be slowed down by the electric field and in this process they lose kinetic energy. On the other hand, the positive charges on the particles gain electric energy because they are transported against the electric force. When hitting the cathode, the particles accept electrons to become neutrally charged. The particles now are neutrally charged and are no longer influenced by the electric field, and in particular, they are not accelerated back towards the anode, as it would have when it would still be positively charged. The positive charges have been transported to the cathode against an electric field, gaining electric energy. The particles were slowed down and therefore have lost thermal energy. The temperature of the gas has been reduced.

While the previous description took the microscopic viewpoint of a single charge being transported, there is also a macroscopic interpretation of the involved processes. In this viewpoint, the charge transfers at cathode and anode, together with the electric field, create a density gradient of charged particles within the fluid. This density gradient issues a diffusion process of charged particles that is directed against the force of the electric field. In the course of the diffusion, the fluid loses temperature, as the kinetic energy of each particle is converted into electric energy.

As a person having ordinary skill in the art will understand is the disclosed concept based on the model of kinetic gas theory, i.e. a physical model to describe thermodynamic behavior of gases. According to this model, particles and molecules of gas are in constant movement and exchange energy via elastic collisions. Due to the constant energy exchange between particles, their movement converges to a steady-state distribution that is multivariate gaussian. Correspondingly, the speed of the particles follows a Maxwell-Boltzmann distribution that depends on particle mass and temperature. Concluding, when a single charged particle has a movement speed and depending on its direction, the particle may move against the electric force, so that kinetic energy is lost but electric energy is gained, leading to an energy transfer from kinetic to electric energy.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A device for transformation of thermal energy directly into electrical energy, comprising
a fluid having particles adapted to accept and emit electrons,
a container, wherein the fluid is accommodated in the container,
a cathode configured to emit electrons, wherein the particles of the fluid accept electrons emit by the cathode,
an anode configured to accept electrons, wherein the particles of the fluid emit electrons accepted by the anode,
a heat transfer unit configured to exchange heat with the fluid so that the particles of the fluid are accelerated,
an electric field generator configured to generate an electric field so that negatively charged particles of the fluid are driven in a direction towards the cathode, while positively charged particles are driven towards the anode.

2. The device of claim 1, wherein the fluid is at least one out of the group consisting of a liquid, a suspension, a gas, and a gas mixture.

3. The device of any one of claims 1 and 2, wherein the fluid is configured to be positively or negatively ionized.

4. The device of any one of claims 1 to 3, wherein the cathode is configured to emit electrons by thermionic emission.

5. The device of any one of claims 1 to 3, wherein the cathode is charged with electrons so that the electrons will be emitted by the cathode and will be accepted by particles of the fluid upon contact of particles at the cathode.

6. The device of any one of claims 1 to 3, wherein the cathode is made of a material having a valence band having higher energy than a lower free band of particles of the fluid, creating a lower work function on the cathode than on the particles, and/or wherein the anode is made of a material having a valence band having lower energy than a higher free band of particles of the fluid, creating a higher work function on the anode than on the particles.

7. The device of claim 6, wherein the work function is created based on a Faraday effect transporting electrons to the surface of the cathode as well as away from the surface of the anode.

8. The device of any one of claims 1 to 3, wherein the anode, the cathode and the fluid are made of materials which interact chemically.

9. The device of any one of claims 1 to 8, wherein the electric field generator comprises a grid arranged within the container.

10. The device of any one of claims 1 to 9, wherein the electric field generator comprises a ring arranged around the container.

11. The device of any one of claims 1 to 10, wherein the electric field generator is integrated in at least one of the anode and the cathode.

12. The device of any one of claims 1 to 11, wherein the electric field generator is arranged at at least one of the anode and the cathode.

13. A method of transforming thermal energy into electrical energy, comprising the steps of
transferring thermal energy to a fluid in a container, the thermal energy increases the kinetic energy of particles of the fluid,
emitting electrons from a cathode, the electrons being accepted by particles of the fluid so that the particles are negatively charged,
establishing an electric field between the cathode and an anode, the electric field urges the negatively charged particles in a direction towards the cathode,
transporting the electrons by the particles against the electric field by means of diffusion, so that kinetic energy of the particles is transformed in potential energy in form of electric charge,
emitting the electrons from the particles to the anode.

14. A method of transforming thermal energy into electrical energy, comprising the steps of
transferring thermal energy to a fluid in a container, the thermal energy increases the kinetic energy of particles of the fluid,
emitting electrons from particles to an anode so that the particles are positively charged,
establishing an electric field between the cathode and an anode, the electric field urges the positively charged particles in a direction towards the anode,
transporting electrons by particles against the electric field so that kinetic energy of the particles is transformed in potential energy in form of electric charge,
accepting electrons from a cathode.

15. A method combining the method of claim 13 and the method of claim 14.
